# EUROPEAN PATENT APPLICATION

(11) **EP 4 606 853 A1**
(43) Date of publication of application: **27.08.2025**
(21) Application number: 23879629.6
(22) Date of filing: 05.10.2023
(51) Int. Cl.: C08L 33/12, B29B 9/16, B29C 45/00, C08J 5/00, C08K 5/09, C08K 5/098, C08K 5/3475

(54) **MOLDING MATERIAL AND RESIN MOLDED PRODUCT**

(30) Priority: 17.10.2022 JP 2022166335
(71) Applicant: Mitsubishi Chemical Corporation, Tokyo 100-8251 (JP)
(72) Inventor: IMAOKA, Shoutaro, Tokyo 100-8251 (JP)
(74) Representative: Ter Meer Steinmeister & Partner
(86) International application number: PCT/JP2023/036336
(87) International publication number: WO 2024/084982

(57) **Abstract**

A molding material containing: a methacrylic-based resin pellet comprising a methacrylic-based resin and a benzotriazole-based ultraviolet absorber; and a fatty acid metal salt externally added to the methacrylic-based resin pellet, wherein the molding material contains a fatty acid. A method for producing a resin molded article containing molding a molding material, wherein the molding material contains a methacrylic-based resin pellet and a fatty acid metal salt externally added to the methacrylic-based resin pellet, and wherein the methacrylic-based resin pellet contains a methacrylic-based resin, a benzotriazole-based ultraviolet absorber, and a fatty acid.

## Description

### Technical Field

The present invention relates to a molding material, and a resin molded article, a vehicle part, an optical part, a container, a medical part, and a housing equipment part made by molding the molding material.

### Background Art

Methacrylic-based resins have been widely used as a molding material for vehicle parts such as tail lamp covers, headlamp covers, meter panels, pillar garnishes, front grills, emblems, and other vehicle interior and exterior materials; building members; housing equipment parts such as washstands, bathtubs, flush toilets, and the like; optical parts such as lenses, light guides, and the like; containers for cosmetics, and the like; and medical parts such as cuvettes, and the like.

When applied to these uses, methacrylic-based resins are molded by molding methods such as press molding, injection molding, gas-assisted injection molding, welding molding, extrusion molding, blow molding, film molding, hollow molding, multilayer molding, melt spinning, and the like. For example, in injection molding, methacrylic-based resin pellets are conveyed into a high-temperature cylinder of an injection molding machine, and then a molten resin is injected into molds processed into various shapes. Thereafter, a molded body obtained by cooling is released from the mold and taken out as a product.

Conventionally, a fatty acid metal salt has been externally added to methacrylic-based resin pellets in order to improve the plasticization, mold releasability, and low-temperature moldability during injection molding of the methacrylic-based resins, and to improve the appearance of the resulting product.

For example, Patent Literature 1 discloses that by applying a monovalent fatty acid metal salt such as lithium stearate and the like to an acrylic polymer particle, a thick film product having good optical performance and excellent aesthetic appearance can be obtained by injection molding at a low temperature.

In a methacrylic-based resin product, an ultraviolet absorber is blended into the molding material in order to ensure weather resistance during storage and use. In this case, as the ultraviolet absorber, benzotriazole-based ultraviolet absorbers are usually used from the viewpoint weather resistance effect.

### Citation List

### Patent Literature

Patent Literature 1: JP H8-294935 A

### Summary of Invention

### Technical Problem

In Patent Literature 1, there is no example which uses a ultraviolet absorber such as a benzotriazole-based ultraviolet absorber and the like, so there is a problem that the resulting resin molded article has poor weather resistance.

In Patent Literature 1, it is considered that the problem of weather resistance can be solved by adding a benzotriazole-based ultraviolet absorber. However, studies conducted by the present inventors have revealed that when a fatty acid metal salt and a benzotriazole-based ultraviolet absorber coexist, the resulting resin molded article yellows.

Methacrylic-based resins are often used in decorative parts due to its transparency, therefor yellowing is a major problem because good appearance and color tone are required.

Conventionally, there was no known technology for solving the yellowing caused by the coexistence of benzotriazole-based ultraviolet absorbers and fatty acid metal salts.

An object of the present invention is to solve the problem of yellowing in molding materials made by externally adding a fatty acid metal salt to methacrylic-based resin pellet containing a benzotriazole-based ultraviolet absorber, and to provide a molding material that provides a molded article having excellent weather resistance, good appearance and color tone and a resin molded article thereof.

### Solution to Problem

The present inventors have discovered that yellowing caused by the coexistence of a benzotriazole-based ultraviolet absorber and a fatty acid metal salt can be suppressed by adding a fatty acid to a molding material comprising a methacrylic-based resin pellet to which a fatty acid metal salt is externally added.

The gist of the present invention is as follows.
[1] A molding material comprising: a methacrylic-based resin pellet comprising a methacrylic-based resin and a benzotriazole-based ultraviolet absorber; and a fatty acid metal salt externally added to the methacrylic-based resin pellet, wherein the molding material comprises a fatty acid.
[2] The molding material according to [1], wherein the metal of the fatty acid metal salt is a monovalent to trivalent metal.
[3] The molding material according to [2], wherein the metal of the fatty acid metal salt is a monovalent metal.
[4] The molding material according to [2], wherein the metal of the fatty acid metal salt is at least one selected from the group consisting of Li, Na, Mg, Ca, Ba, K, and Al.
[5] The molding material according to [4], wherein the metal of the fatty acid metal salt is Li.
[6] The molding material according to any one of [1] to [5], wherein the benzotriazole-based ultraviolet absorber is at least one selected from the group consisting of 2-(2'-hydroxy-5'-methylphenyl)benzotriazole, 2-[2-hydroxy-3,5-bis(α,α-dimethylbenzyl)phenyl]-2H -benzotriazole, 2-(2'-hydroxy-3'-t-butyl-5'-methylphenyl)-5-chlorobenzotriazole, 2-(2H-benzotriazol-2-yl)-4-methylphenol, 6-di-t-pentylphenol, and 2-(2'-hydroxy-5'-t-octylphenyl)benzotriazole.
[7] The molding material according to [6], wherein the benzotriazole-based ultraviolet absorber is 2-(2H-benzotriazol-2-yl)-4-methylphenol.
[8] The molding material according to any one of [1] to [7], wherein the fatty acid is at least one selected from the group consisting of saturated fatty acids having 8 to 22 carbon atoms and unsaturated fatty acids having 8 to 22 carbon atoms.
[9] The molding material according to [8], wherein the fatty acid is at least one selected from the group consisting of palmitic acid, stearic acid, myristic acid, lauric acid, and montanic acid.
[10] The molding material according to [9], wherein the fatty acid is palmitic acid.
[11] The molding material according to any one of [1] to [10], wherein an amount of the externally added fatty acid metal salt is 0.0001 parts by mass to 0.5 parts by mass relative to 100 parts by mass of the methacrylic-based resin pellet.
[12] The molding material according to any one of [1] to [11], wherein the content of the benzotriazole-based ultraviolet absorber is 0.001 parts by mass to 0.3 parts by mass based on 100 parts by mass of the methacrylic-based resin pellet.
[13] The molding material according to any one of [1] to [12], wherein when the fatty acid is contained in the methacrylic-based resin pellet, the amount of the fatty acid is 0.0001 parts by mass to 0.5 parts by mass based on 100 parts by mass of the methacrylic-based resin pellet, and when the fatty acid is externally added to the methacrylic-based resin pellet, the amount of the fatty acid is 0.0001 parts by mass to 0.5 parts by mass based on 100 parts by mass of the total mass of the methacrylic-based resin pellet and the fatty acid.
[14] The molding material according to any one of [1] to [13], wherein the methacrylic-based resin pellet has a surface area of 10 mm² to 450 mm².
[15] The molding material according to any one of [1] to [14], wherein the content of repeating units derived from methyl methacrylate in the methacrylic-based resin is 50% by mass or more.
[16] The molding material according to any one of [1] to [15], wherein the molding material is used for press molding, extrusion molding, injection molding, or film molding.
[17] A molding material for injection molding comprising the molding material according to any one of [1] to [15].
[18] Use of the molding material according to any one of [1] to [15] for press molding, extrusion molding, injection molding, or film molding.
[19] Use of the molding material according to any one of [1] to [15] for injection molding.
[20] A resin molded article made by molding the molding material according to any one of [1] to [17].
[21] A vehicle part made by molding the molding material according to any one of [1] to [17].
[22] An optical part made by molding the molding material according to any one of [1] to [17].
[23] A container made by molding the molding material according to any one of [1] to [17].
[24] A medical part made by molding the molding material according to any one of [1] to [17].
[25] A housing equipment part made by molding the molding material according to any one of [1] to [17].
[26] A method for producing a resin molded article comprising molding a molding material, wherein the molding material comprises a methacrylic-based resin pellet and a fatty acid metal salt externally added to the methacrylic-based resin pellet, and wherein the methacrylic-based resin pellet contains a methacrylic-based resin, a benzotriazole-based ultraviolet absorber, and a fatty acid.
[27] A method for producing a resin molded article comprising molding a molding material, wherein the molding material comprises a methacrylic-based resin pellet, a fatty acid metal salt, and a fatty acid, wherein the fatty acid metal salt and the fatty acid are externally added to the methacrylic-based resin pellet, and wherein the pellet contains a methacrylic-based resin, and a benzotriazole-based ultraviolet absorber.
[28] The method for producing a resin molded article according to [26] or [27], wherein the resin molded article is obtained by injection molding the molding material.

### Advantageous Effects of Invention

According to the present invention, in a molding material in which a fatty acid metal salt is externally added to a methacrylic-based resin pellet containing a benzotriazole-based ultraviolet absorber, the problem of yellowing is solved by the molding material containing a fatty acid, and a methacrylic-based resin molded article having good appearance and color tone, as well as excellent weather resistance can be provided.

### Description of Embodiments

The present invention will be described below in detail. The present invention is not limited to the following embodiments, and can be implemented with various modifications within the scope of the gist.

### [Molding material]

The molding material of the present invention comprises a methacrylic-based resin pellet comprising a methacrylic-based resin and a benzotriazole-based ultraviolet absorber; and a fatty acid metal salt externally added to the methacrylic-based resin pellet, wherein the molding material comprises a fatty acid.

Hereinafter, the molding material comprising a methacrylic-based resin pellet comprising a methacrylic-based resin and a benzotriazole-based ultraviolet absorber; and a fatty acid metal salt externally added to the methacrylic-based resin pellet, wherein the molding material comprises a fatty acid is sometimes referred to as "the molding material of the present invention".

Hereinafter, the methacrylic-based resin pellet containing the benzotriazole-based ultraviolet absorber and before the external addition of the fatty acid metal salt is sometimes referred to as "the methacrylic-based resin pellet of the present invention".

Furthermore, hereinafter, adding the benzotriazole-based ultraviolet absorber to the methacrylic-based resin pellet is sometimes referred to as "internal addition", and adhering or coating the fatty acid metal salt onto the methacrylic-based resin pellet is sometimes referred to as "external addition".

The fatty acid may be contained by "internal addition" in which it is contained in the methacrylic-based resin pellet, or it may be contained by "external addition" in which it is contained by being adhered or coated onto the methacrylic-based resin pellet, as long as the fatty acid may be contained in the molding material of the present invention.

### <Mechanism>

The mechanism by which yellowing caused by the coexistence of the benzotriazole-based ultraviolet absorber and the fatty acid metal salt can be suppressed by containing the fatty acid in the molding material according to the present invention is considered as follows.

The mechanism of weather resistance improvement by benzotriazole-based ultraviolet absorbers is as follows.

Ultraviolet light causes a benzotriazole-based compound (for example, Tinuvin (registered trademark)-P) to transition to an excited state and then diactivate to the electronic ground state via the intramolecular hydrogen bond between the phenolic hydroxyl group and the benzotriazole group without emitting light. This process converts ultraviolet energy into thermal energy.

That is, since benzotriazole-based compounds have a phenolic hydroxyl group that participates in such intramolecular hydrogen bonding in their molecules, they can prevent ultraviolet deterioration and exhibit the effect of improving weather resistance.

As described above, since benzotriazole-based ultraviolet absorbers have a phenolic hydroxyl group, it is considered that when metal species such as fatty acid metal salts are present, they may undergo a complex-forming reaction, and the metal complexes produced by this reaction may cause of yellowing.

The complex-formation reaction is presumed to be a reversible reaction, and when a fatty acid (for example, palmitic acid) that acts as a conjugate acid for the fatty acid metal salt is present in the reaction system, the reaction between the fatty acid metal salt and the benzotriazole-based ultraviolet absorber is suppressed. As a result, it is considered that yellowing is suppressed.

### <Molding material>

The molding material of the present invention is obtained by externally adding a fatty acid metal salt to the methacrylic-based resin pellet of the present invention. The methacrylic-based resin pellet of the present invention contains at least a methacrylic-based resin (synonymous with methacrylic-based polymer. Hereinafter, the methacrylic-based resin according to the present invention may be sometimes referred to as a "methacrylic-based polymer".) and a benzotriazole-based ultraviolet absorber.

### <Methacrylic polymer>

A methacrylic-based polymer is a polymer whose main component is a repeating unit derived from methyl methacrylate (hereinafter, also sometimes referred to as "methyl methacrylate unit"). By containing the methacrylic-based polymer, the molding material of the present invention improves the transparency of the resulting resin molded article, suppresses thermal decomposition of the resin molded article, and improves weather resistance and moldability. In the present invention, "containing methyl methacrylate units as a main component" means, in one embodiment, that the content ratio of methyl methacrylate units in the methacrylic-based polymer (100% by mass) is 50% by mass or more.

For the above reasons, the content ratio of the methyl methacrylate units in the methacrylic-based polymer (100% by mass) contained in the molding material of the present invention is preferably 50% by mass or more. Examples of such methacrylic-based polymer include homopolymers of methyl methacrylate and copolymers containing 50% by mass or more and less than 100% by mass of methyl methacrylate units and more than 0% by mass and 50% by mass or less of repeating units derived from monomers other than methyl methacrylate (hereinafter, sometimes referred to as "other monomer units").

The monomers other than methyl methacrylate that form the other monomer units are not particularly limited as long as they are monomers that can be copolymerized with methyl methacrylate. The other monomer may be a monofunctional monomer having one radically polymerizable double bond in one molecule, or may be a polyfunctional monomer having two or more radically polymerizable double bonds in one molecule. From the viewpoint of an excellent balance between fluidity, moldability, and thermal decomposition properties of the methacrylic-based polymer, acrylic acid esters are preferred as monomers other than methyl methacrylate.

When the methacrylic-based polymer contains a repeating unit derived from acrylic acid ester (hereinafter, also sometimes referred to as "acrylic acid ester units") as other monomer units, it is preferable to contain 50% by mass or more and less than 100% by mass of methyl methacrylate units and more than 0% by mass and 50% by mass or less of acrylic acid ester units, more preferable to contain 70% by mass or more and less than 100% by mass of methyl methacrylate units and more than 0% by mass and 30% by mass or less of acrylic acid ester units, even more preferable to contain 80% by mass or more and 99.9% by mass or less of methyl methacrylate units and 0.1% by mass or more and 20% by mass or less of acrylic acid ester units, and particularly preferable to contain 90% by mass or more and 99.5% and by mass or less of methyl methacrylate units and 0.5% by mass or more and 10% by mass or less of acrylic acid ester units, in the methacrylic-based polymer (100% by mass).

Examples of acrylic acid ester include methyl acrylate, ethyl acrylate, n-propyl acrylate, iso-propyl acrylate, n-butyl acrylate, iso-butyl acrylate, sec-butyl acrylate, tert-butyl acrylate, n-hexyl acrylate, cyclohexyl acrylate, n-octyl acrylate, 2-ethylhexyl acrylate, isobornyl acrylate, glycidyl acrylate, tetrahydrofurfuryl acrylate, norbornyl acrylate, adamantyl acrylate, dicyclo pentenyl acrylate, dicyclo pentanyl acrylate, 2-hydroxyethyl acrylate, 2-hydroxypropyl acrylate, and the like. Among these, methyl acrylate, ethyl acrylate, butyl acrylate, cyclohexyl acrylate, benzyl acrylate, 2-ethylhexyl acrylate, and 2-hydroxyethyl acrylate are preferable, and methyl acrylate and ethyl acrylate are more preferable. One type of the acrylic acid esters may be used alone, or two or more types may be used in combination.

As another embodiment of the methacrylic-based polymer, a polymer (A) having a repeating unit derived from a (meth)acrylic acid ester monomer (hereinafter, also sometimes referred to as a "(meth)acrylic acid ester unit". Here, "(meth)acrylic acid ester" means "methacrylic acid ester" or "methacrylic acid ester and acrylic acid ester".) and a structural unit derived from a ring structure (hereinafter, abbreviated as "ring structural unit") in the main chain can be mentioned. Examples of the ring structural unit include a glutaric anhydride structural unit, a maleic anhydride structural unit, a glutarimide structural unit, a lactone ring structural unit, and an N-substituted maleimide structural units. One type of the ring structural units may be used alone, or two or more types may be used in combination.

The lower limit of the content ratio of the (meth)acrylic acid ester units in the polymer (A) is not particularly limited. From the viewpoint of not impairing the inherent performance of the methacrylic-based resin, which is excellent transparency, processability, and mechanical properties of the resulting resin molded article, the content ratio of the (meth)acrylic acid ester units is preferably 80% by mole or more, more preferably 90% by mole or more, and even more preferably 94% by mole or more, relative to the total number of moles (100% by mole) of the repeating units (including structural units; the same applies hereinafter) contained in the polymer (A). The upper limit of the content ratio of the (meth)acrylic acid ester units in the polymer (A) is not particularly limited. From the viewpoint of excellent heat resistance of the resulting resin molded article, the content ratio of the (meth)acrylic acid ester units is preferably 99.999% by mole or less, more preferably 99.9% by mole or less, and even more preferably 99.5% by mole or less, relative to the total number of moles (100% by mole) of the repeating units contained in the polymer (A).

The above upper limit value and lower limit value can be arbitrarily combined. For example, the content ratio of the (meth)acrylic acid ester units in the polymer (A) is preferably 80 to 99.999% by mole, more preferably 90 to 99.9% by mole, and even more preferably 94 to 99.5% by mole, relative to the total number of moles (100% by mole) of the repeating units contained in the polymer (A).

The lower limit of the content ratio of the ring structural units in the polymer (A) is not particularly limited. From the viewpoint of excellent heat resistance of the resulting resin molded article, the content ratio of the ring structural unit is preferably 0.001% by mole or more, more preferably 0.01% by mole or more, and even more preferably 0.05% by mole or more, relative to the total number of moles (100% by mole) of the repeating units contained in the polymer (A). The upper limit of the content ratio of the ring structural unit in the polymer (A) is not particularly limited. From the viewpoints excellent heat resistance, suppressing molding coloration, excellent molded appearance, and excellent weather resistance of the resulting resin molded article, the content ratio of the ring structural units is preferably 10% by mole or less, more preferably 3% by mole or less, and even more preferably 0.3% by mole or less, relative to the total number of moles (100% by mole) of the repeating units contained in the polymer (A).

The above upper limit value and lower limit value can be arbitrarily combined. For example, the content ratio of the ring structural units in the polymer (A) is preferably 0.001 to 10% by mole, more preferably 0.01 to 3% by mole, and even more preferably 0.05 to 0.3% by mole, relative to the total number of moles (100% by mole) of the repeating units contained in the polymer (A).

Among the (meth)acrylic acid esters other than methyl methacrylate that form the (meth)acrylic acid ester unit, examples of the acrylic acid ester include the acrylic acid esters exemplified in the explanation of the methacrylic-based polymer above. Examples of methacrylic acid esters other than methyl methacrylate include ethyl methacrylate, n-propyl methacrylate, iso-propyl methacrylate, n-butyl methacrylate, iso-butyl methacrylate, sec-butyl methacrylate, tert-butyl methacrylate, n-hexyl methacrylate, cyclohexyl methacrylate, n-octyl methacrylate, 2-ethylhexyl methacrylate, isobornyl methacrylate, glycidyl methacrylate, tetrahydrofurfuryl methacrylate, norbornyl methacrylate, adamantyl methacrylate, dicyclopentenyl methacrylate, dicyclopentanyl methacrylate, 2-hydroxyethyl methacrylate, 2-hydroxypropyl methacrylate, and the like.

One type of these (meth)acrylic acid esters may be used alone, or two or more types may be used in combination.

The polymer (A) can contain a structural unit derived from a monomer having a carboxyl group (hereinafter, also referred to as a "monomer unit having a carboxyl group"). Some of the monomer unit having a carboxyl group can form a ring structural unit by, for example, a cyclization reaction with an ester group, thereby introducing the ring structural unit into the main chain of the methacrylic-based polymer. Therefore, the methacrylic-based polymer may contain a monomer unit having a carboxyl group. Examples of the monomer having a carboxyl group include acrylic acid, methacrylic acid (hereinafter, acrylic acid and/or methacrylic acid is referred to as "(meth)acrylic acid"), 2-(hydroxymethyl)acrylic acid, 2-(hydroxyethyl)acrylic acid and crotonic acid. One type of the monomers having a carboxyl group may be used alone, or two or more types may be used in combination.

One embodiment of the polymer (A) is a polymer containing, as a (meth)acrylic acid ester unit, a repeating unit (A1) (hereinafter, also referred to as "unit (A1)") derived from methyl methacrylate, and a repeating unit (A2) (hereinafter, also referred to as "unit (A2)") derived from (meth)acrylic acid, and a glutaric anhydride structural unit (A3) (hereinafter, also referred to as "unit (A3)") as a ring structural unit.

By including the unit (A3) in the polymer (A), it is easy to improve the heat resistance of the resulting resin molded article. The unit (A3) is represented by the following chemical structural formula. 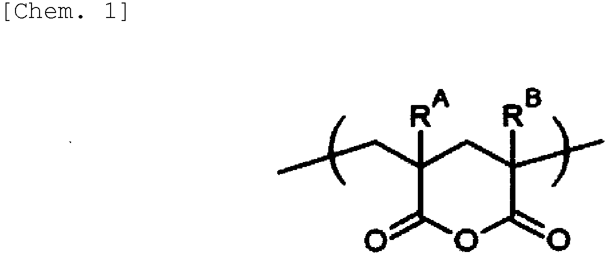 (In the formula, R^{A} and R^{B} each independently represent a hydrogen atom or a methyl group.)

The lower limit of the content ratio of the unit (A1) in the polymer (A) is not particularly limited. From the viewpoint of not impairing the inherent performance of the methacrylic-based resin, which is excellent transparency, processability, and mechanical properties of the resulting resin molded article, the content ratio of the unit (A1) in the polymer (A) is preferably 80% by mole or more, more preferably 90% by mole or more, and even more preferably 94% by mole or more, relative to the total number of moles (100% by mole) of the repeating units contained in the polymer (A). The upper limit of the content ratio of the unit (A1) in the polymer (A) is not particularly limited. From the viewpoint of excellent heat resistance of the resulting resin molded article, the content ratio of the unit (A1) in the polymer (A) is preferably 99.4% by mole or less, more preferably 99% by mole or less, and even more preferably 98% by mole or less, relative to the total number of moles (100% by mole) of the repeating units contained in the polymer (A).

The above upper limit value and lower limit value can be arbitrarily combined. For example, the content ratio of the unit (A1) in the polymer (A) is preferably 80 to 99.4% by mole, more preferably 90 to 99% by mole, and even more preferably 94 to 98% by mole, relative to the total number of moles (100% by mole) of the repeating units contained in the polymer (A).

As the unit (A2), a methacrylic acid unit is preferable because the resulting resin molded article has excellent heat resistance.

The lower limit of the content ratio of the unit (A2) in the polymer (A) is not particularly limited. From the viewpoints of excellent heat resistance and mechanical properties of the resulting resin molded article, the content ratio of the unit (A2) in the polymer (A) is preferably 0.5% by mole or more, more preferably 1% by mole or more, and even more preferably 2% by mole or more, relative to the total number of moles (100% by mole) of the repeating units contained in the polymer (A). The upper limit of the content ratio of the unit (A2) in the polymer (A) is not particularly limited. From the viewpoints of suppressing molding coloration, excellent molded appearance and low water absorption of the resulting resin molded article, and moldability, the content ratio of the unit (A2) in the polymer (A) is preferably 20% by mole or less, more preferably 7% by mole or less, even more preferably 3.5% by mole or less, relative to the total number of moles (100% by mole) of the repeating units contained in the polymer (A)).

The above upper limit value and lower limit value can be arbitrarily combined. For example, the content ratio of the unit (A2) in the polymer (A) is preferably 0.5 to 20% by mole, more preferably 1 to 7% by mole, and even more preferably 2 to 3.5% by mole, relative to the total number of moles (100% by mole) of the repeating units contained in the polymer (A).

The lower limit of the content ratio of the unit (A3) in the polymer (A) is not particularly limited. From the viewpoint of excellent heat resistance of the resulting resin molded article, the content ratio of the unit (A3) is preferably 0.001% by mole or more, more preferably 0.01% by mole or more, and even more preferably 0.05% by mole or more, relative to the total number of moles (100% by mole) of the repeating units contained in the polymer (A). From the viewpoints suppressing molding coloration, excellent molded appearance, and excellent weather resistance of the resulting resin molded article, the upper limit of the content ratio of the unit (A3) in the polymer (A) is preferably 10% by mole or less, more preferably 3% by mole or less, and even more preferably 0.3% by mole or less, relative to the total number of moles (100% by mole) of the repeating units contained in the polymer (A).

The above upper limit value and lower limit value can be arbitrarily combined. For example, the content ratio of the unit (A3) in the polymer (A) is preferably 0.001 to 10% by mole, more preferably 0.01 to 3% by mole, and even more preferably 0.05 to 0.3% by mole, relative to the total number of moles (100% by mole) of the repeating units contained in the polymer (A).

In a copolymer obtained by copolymerizing methyl methacrylate and (meth)acrylic acid, the unit (A3) may also be a unit produced by a cyclization reaction between a methoxycarbonyl group derived from the unit (A1) and a carboxyl group derived from the adjacent unit (A2).

In the present invention, the content of each unit in the methacrylic-based resin such as the polymer (A) and the like is a value calculated from ¹H-NMR measurement. Specifically, the method disclosed in WO 2019/013186 A1 can be used.

The method for producing the methacrylic-based resin is not particularly limited. Examples include bulk polymerization, suspension polymerization, emulsion polymerization, and solution polymerization. From the viewpoint of excellent productivity, bulk polymerization and suspension polymerization are preferred.

Of the methacrylic-based resins, the method for producing the polymer (A) containing the unit (A1), the unit (A2), and the unit (A3) is not particularly limited. For example, the producing method disclosed in WO 2017/022393 A1 and WO 2019/013186 A1 can be used.

### <Benzotriazole-based ultraviolet absorber>

The benzotriazole-based ultraviolet absorber is not particularly limited, and conventionally known benzotriazole-based ultraviolet absorbers can be used.

Examples of the benzotriazole-based ultraviolet absorber include 2-(2'-hydroxy-5'-methylphenyl)benzotriazole, 2-[2-hydroxy-3,5-bis(α,α-dimethylbenzyl)phenyl]-2H -benzotriazole, 2-(2'-hydroxy-3'-t-butyl-5'-methylphenyl)-5-chlorobenzotriazole, 2-(2H-benzotriazol-2-yl)-4-methylphenol, 6-di-t-pentylphenol, 2-(2'-hydroxy-5'-t-octylphenyl)benzotriazole, 2-(2-hydroxy-3,5-dicumylphenyl)benzotriazole, 2,2' -methylenebis[4-(1,1,3,3-tetramethylbutyl)-6-(2H-benzotriazol-2-yl)phenol], 2-(2-hydroxy-3,5-di-t-butyl) phenyl)benzotriazole, 2-(2-hydroxy-3,5-di-t-butylphenyl)-5-chlorobenzotriazole, 2-(2-hydroxy-3,5-di-t-amylphenyl)benzotriazole , 2-(2-hydroxy-5-t-butylphenyl)benzotriazole, 2-(2-hydroxy-4-octoxyphenyl)benzotriazole, 2,2'-methylenebis(4-cumyl-6-(2H- benzotriazol-2-yl)phenol, 2,2'-methylenebis[6-(2H-benzotriazol-2-yl)-4-(2-hydroxyethyl)phenol], 2-[2-hydroxy-3-(4,5,6,7-tetrahydro-1,3-dioxo-1H-isoindol-2-ylmethyl)-5-methylphenyl]-2H-benzotriazole, and the like. Among these, from the viewpoint of compatibility with the methacrylic-based resin, 2-(2'-hydroxy-5'-methylphenyl)benzotriazole, 2-[2-hydroxy-3,5-bis(α,α-dimethylbenzyl)phenyl]-2H-benzotriazole , 2-(2'-hydroxy-3'-t-butyl-5'-methylphenyl)-5-chlorobenzotriazole, 2-(2H-benzotriazol-2-yl)-4-methylphenol, 6-di -t-pentylphenol and 2-(2'-hydroxy-5'-t-octylphenyl)benzotriazole are preferred, and 2-(2H-benzotriazol-2-yl)-4-methylphenol is particularly preferred.

One type of these benzotriazole-based ultraviolet absorbers may be used alone, or two or more types may be used in combination.

Commercially available products can be used as these benzotriazole-based ultraviolet absorbers. For example, the Tinuvin (registered trademark) series manufactured by BASF Japan can be used.

Although the lower and upper limits of the content (internal addition amount) of the benzotriazole-based ultraviolet absorber in the methacrylic-based resin pellet of the present invention are not particularly limited, the content is preferably 0.001 parts by mass or more and 0.3 parts by mass or less, relative to 100 parts by mass of the methacrylic-based resin pellet.

When the content of the benzotriazole-based ultraviolet absorber is equal or more than the above mentioned lower limit, the effect of improving weather resistance due to the inclusion of the benzotriazole-based ultraviolet absorber can be sufficiently obtained. The content of the benzotriazole-based ultraviolet absorber is more preferably 0.002 parts by mass or more, even more preferably 0.003 parts by mass or more, particularly preferably 0.005 parts by mass or more, and most preferably 0.009 parts by mass or more.

When the content of the benzotriazole-based ultraviolet absorber is equal or less than the above mentioned upper limit, yellowing of the resin molded article due to the inclusion of the benzotriazole-based ultraviolet absorber can be reduced. The content of the benzotriazole-based ultraviolet absorber is more preferably 0.1 parts by mass or less, even more preferably 0.07 parts by mass or less, particularly preferably 0.06 parts by mass or less, and most preferably 00.5 parts by mass or less.

The above upper limit value and lower limit value can be arbitrarily combined. The content of the benzotriazole-based ultraviolet absorber in the methacrylic-based resin pellet of the present invention is preferably 0.001 parts by mass to 0.3 parts by mass, more preferably 0.002 parts by mass to 0.1 parts by mass, even more preferably 0.003 parts by mass to 0.07 parts by mass, particularly preferably 0.005 parts by mass to 0.06 parts by mass, and most preferably 0.009 parts by mass to 0.05 parts by mass.

### <Other additives>

In addition to the benzotriazole-based ultraviolet absorber described above, the methacrylic-based resin pellet of the present invention contains the fatty acid described below, and also may contain one or more of the various additives that are usually internally added to molding materials within a range that does not impair the effects of the present invention.

Examples of the additives include a light diffusing agent, an antioxidant, a colorant, a pigment, a dye, a heat stabilizer, a reinforcing agent, a filler, a flame retardant, a foaming agent, a lubricant other than the fatty acid, a plasticizer, an antistatic agent, a light stabilizer, an impact resistance improver, a fluidity improver, a mold release agent, a processing elasticity imparting agent, an ultraviolet absorber other than the benzotriazole-based ultraviolet absorber, and the like.

### <Shape, size, and surface area>

The methacrylic-based resin pellet of the present invention is fed to a molding machine such as press molding, extrusion molding, injection molding, film molding, or the like. There is no particular limitation on the shape of the pellet, and it may be cylindrical, spherical, cubic, or the like.

Although there is no particular restriction on the size of the methacrylic-based resin pellet, for example, in the case of a cylindrical shape, the length in the axial direction (axial length) of the cylinder is preferably about 1.5 to 6 mm, the length of the major axis of the face perpendicular to the axial direction is preferably about 1.5 to 5 mm, and the length of the minor axis of the face perpendicular to the axial direction is preferably about 1.5 to 4.5 mm. In the case of other shapes, it is preferable that the size is such that the volume is equivalent to that of the cylindrical methacrylic-based resin pellet having the above mentioned dimensions.

Although the surface area of the methacrylic-based resin pellet is also not particularly limited, for example, in the case of a cylindrical shape, it is preferably 10 mm² to 450 mm², more preferably 30 mm² to 300 mm², and particularly preferably 40 mm² to 200 mm². In the case of other shapes, it is preferable that the surface area is equivalent to that of a cylindrical methacrylic-based resin pellet having the above dimensions. When the surface area of the methacrylic-based resin pellet is within the above range, it becomes possible to externally add the fatty acid metal salt within a predetermined range, and it becomes possible to provide a resin molded article having excellent appearance, color tone, and weather resistance.

### <Method for producing methacrylic-based resin pellet>

In producing the methacrylic-based resin pellet to which the fatty acid described below has been internally added, the methacrylic-based resin pellet of the present invention to which the above mentioned benzotriazole-based ultraviolet absorber, the fatty acid described below, and other additives used as necessary have been internally added can be produced by adding the benzotriazole-based ultraviolet absorber, the fatty acid described below, and other additives used as necessary in a predetermined ratio to a polymerization reaction tank or to a raw material introduction path to the polymerization reaction tank when producing a methacrylic-based resin according to a conventional method, and then carrying out a polymerization reaction and pelletizing the reaction product. Alternatively, the produced methacrylic-based resin, the benzotriazole-based ultraviolet absorber, the fatty acid described below, and other additives used as necessary are charged in a predetermined ratio into a single-screw extruder or a twin-screw extruder, heated to melt-knead, and then pelletized, whereby the methacrylic-based resin pellet of the present invention having these additives internally added thereto can also be produced.

The methacrylic-based resin pellet having the fatty acid described below internally added can also be produced by adding some of the benzotriazole-based ultraviolet absorber, the fatty acid described below, and the other additives used as necessary into a polymerization reaction tank or in a raw material introduction path to the polymerization reaction tank to produce a methacrylic-based resin, and then adding the remainder of these ingredients to the produced methacrylic-based resin and melt-kneading the mixture in a single-screw extruder or a twin-screw extruder.

### <Fatty acid>

A saturated fatty acid having 8 to 22 carbon atoms and/or an unsaturated fatty acid having 8 to 22 carbon atoms is preferred as the fatty acid contained in the methacrylic-based resin pellet of the present invention containing the internally added fatty acid, and the fatty acid contained in the molding material of the present invention containing the externally added fatty acid, from the viewpoint of compatibility with the methacrylic-based resin.

Examples of the saturated fatty acid having 8 to 22 carbon atoms include caprylic acid (8 carbon atoms), pelargonic acid (9 carbon atoms), capric acid (10 carbon atoms), lauric acid (12 carbon atoms), myristic acid (14 carbon atoms), pentadecyl acid (15 carbon atoms), palmitic acid (16 carbon atoms), margaric acid (17 carbon atoms), stearic acid (18 carbon atoms), arachidic acid (20 carbon atoms), henicosylic acid (21 carbon atoms) , behenic acid (carbon number 22), and the like.

Examples of the unsaturated fatty acid having 8 to 22 carbon atoms include myristoleic acid (14 carbon atoms), palmitoleic acid (16 carbon atoms), sapienic acid (16 carbon atoms), oleic acid (18 carbon atoms), elaidic acid (18 carbon atoms), vaccenic acid (18 carbon atoms), gadoleic acid (20 carbon atoms), eicosenoic acid (20 carbon atoms), erucic acid (22 carbon atoms), linoleic acid (18 carbon atoms), eicosadienoic acid (carbon atoms 20), docosadienoic acid (22 carbon atoms), α-linolenic acid (18 carbon atoms), γ-linolenic acid (18 carbon atoms), pinolenic acid (18 carbon atoms), α-eleostearic acid (18 carbon atoms) , β-eleostearic acid (18 carbon atoms), mead acid (20 carbon atoms), dihomo-γ-linolenic acid (20 carbon atoms), eicosatrienoic acid (20 carbon atoms), stearidonic acid (18 carbon atoms) , arachidonic acid (20 carbon atoms), eicosatetraenoic acid (20 carbon atoms), adrenic acid (22 carbon atoms), boseopentaenoic acid (18 carbon atoms), eicosapentaenoic acid (20 carbon atoms), ozbond acid (22 carbon atoms), clupanodonic acid (22 carbon atoms), docosahexaenoic acid (22 carbon atoms), and the like.

One type of these fatty acids may be used alone, two or more types may be used in combination.

Among the above mentioned fatty acids, saturated fatty acids having 8 to 22 carbon atoms are preferred from the viewpoint of weather resistance, and from the viewpoint of preventing mold contamination during molding, palmitic acid, stearic acid, myristic acid, lauric acid, or montanic acid are particularly preferred, palmitic acid is most preferred.

Although the lower and upper limits of the fatty acid content (internally added amount) in the methacrylic-based resin pellet of the present invention are not particularly limited, the content is preferably 0.0001 parts by mass or more and 0.5 parts by mass or less, relative to 100 parts by mass of the methacrylic-based resin pellet.

When the fatty acid content is equal to or more than the above mentioned lower limit, a sufficient yellowing inhibiting effect can be obtained by containing the fatty acid. This lower limit is more preferably 0.005 parts by mass or more, even more preferably 0.01 parts by mass or more, particularly preferably 0.03 parts by mass or more, and most preferably 0.05 parts by mass or more.

When the fatty acid content is equal or less than the above mentioned upper limit, the mold will not be easily contaminated during molding. This upper limit is more preferably 0.4 parts by mass or less, even more preferably 0.3 parts by mass or less, particularly preferably 0.2 parts by mass or less, and most preferably 0.1 parts by mass or less.

The above upper limit value and lower limit value can be arbitrarily combined. That is, the content of the fatty acid in the methacrylic-based resin pellet of the present invention is preferably 0.0001 parts by mass to 0.5 parts by mass, more preferably 0.005 parts by mass to 0.4 part by mass, even more preferably 0.01 part by mass to 0.3 part by mass, particularly preferably 0.03 part by mass to 0.2 part by mass, and most preferably 0.05 part by mass to 0.1 part by mass, relative to 100 parts by mass of the methacrylic-based resin pellet.

Even when externally adding the fatty acid to the methacrylic-based resin pellet, the content may be the same as the internal addition amount described above. That is, the ratio of the fatty acid relative to 100 parts by mass of the total of the methacrylic-based resin pellet and the externally added fatty acid may be within the above range.

Examples of the method for adding the fatty acid to the molding material of the present invention include, but are not limited to, a method of internally adding the fatty acid into the methacrylic-based resin pellet; a method of externally adding the fatty acid to the methacrylic-based resin pellet, a method of adding the fatty acid during a work process, for example, a method of feeding the methacrylic-based resin pellet and the fatty acid into the same slurry and then performing injection molding.

Examples of the method for internally adding the fatty acid include the method of using the fatty acid together with the benzotriazole-based ultraviolet absorber in the method for internally adding the benzotriazole-based ultraviolet absorber in <Method for producing methacrylic-based resin pellet>, as described above.

Examples of the method for externally adding the fatty acid include a method of the using fatty acid together with the fatty acid metal salt in the method for externally adding the fatty acid metal salt in <Method for producing molding material>, as described below.

However, the method for internally and/or externally adding the fatty acid is not limited to these methods. Regardless of which method is used, the inclusion of the fatty acid in the molding material of the present invention makes it possible to obtain a sufficient yellowing inhibiting effect.

### <Fatty acid metal salt>

From the viewpoint of availability, the metal species of the fatty acid metal salt externally added to the methacrylic-based resin pellet of the present invention are preferably monovalent to trivalent metals, particularly preferably monovalent to divalent metals, and especially preferably monovalent metals.

Specific examples of the metal of the fatty acid metal salt include Li, Na, Mg, Ca, Al, Ba, K, Zn, and the like. Among these, Li, Na, Mg, Ca, Al, Ba, and K are preferred because they have high compatibility with the methacrylic-based resin and are less likely to cause clouding in the resulting resin molded article. In particular, Li is preferred from the viewpoint of improving the appearance of the resulting resin molded article.

Examples of the fatty acid constituting the fatty acid metal salt include those similar to those exemplified as the fatty acid contained in the molding material of the present invention, and preferred ones are also the same.

From the viewpoint of availability, the fatty acid of the fatty acid metal salt is preferably palmitic acid, stearic acid, myristic acid, lauric acid or montanic acid, and stearic acid is particularly preferred.

As the fatty acid metal salt, lithium stearate is most preferable from the viewpoint of improving the appearance of the resulting resin molded article.

One type of these fatty acid metal salts may be used alone, or two or more types may be used in combination.

Although the lower limit and upper limit of the amount of the fatty acid metal salt externally added to the methacrylic-based resin pellet of the present invention are not particularly limited, the amount is preferably 0.0001 parts by mass or more and 0.5 parts by mass or less, relative to 100 parts by mass of the methacrylic-based resin pellet.

When the external addition amount of the fatty acid metal salt is equal to or more than the above mentioned lower limit, the effect of improving the appearance of the resulting resin molded article can be more effectively obtained due to the effect of improving the plasticization behavior during molding by the fatty acid metal salt. This lower limit is more preferably 0.001 parts by mass or more, even more preferably 0.003 parts by mass or more, particularly preferably 0.005 parts by mass or more, and most preferably 0.01 parts by mass or more.

When the external addition amount of the fatty acid metal salt is equal or less than the above mentioned upper limit, contamination of the mold and the resin molding article due to excess fatty acid metal salt remaining on the mold surface during mold release is unlikely to occur. This upper limit is more preferably 0.3 parts by mass or less, even more preferably 0.2 parts by mass or less, particularly preferably 0.1 parts by mass or less, and most preferably 0.05 parts by mass or less.

The above upper limit value and lower limit value can be arbitrarily combined. That is, the external addition amount of the fatty acid metal salt is preferably 0.0001 parts by mass to 0.5 parts by mass, more preferably 0.001 parts by mass to 0.3 parts by mass, even more preferably 0.003 parts by mass to 0.2 parts by mass, particularly preferably 0.005 parts by mass to 0.1 parts by mass, and most preferably 0.01 parts by mass to 0.05 parts by mass, relative to 100 parts by mass of the methacrylic-based resin pellet.

### <Method for producing molding material>

There are no particular limitations on the method for producing the molding material of the present invention in which the fatty acid metal salt, or the fatty acid metal salt and the fatty acid are added externally. Any method may be used as long as the fatty acid metal salt is added externally to the methacrylic-based resin pellet of the present invention in a state in which it is not chemically bonded.

Examples of the method for producing the molding material of the present invention include a method by dry blending; a method in which the fatty acid metal salt (or the fatty acid metal salt and the fatty acid) is sprayed or added as a powder to the methacrylic-based resin pellet of the present invention and stirred using a stirring device; and a method in which the methacrylic-based resin pellet of the present invention are dispersed in a liquid containing the fatty acid metal salt (or the fatty acid metal salt and the fatty acid) and then the solvent on the pellet surface is removed.

Examples of the dry blending method include a method of mixing the methacrylic-based resin pellet of the present invention and the fatty acid metal salt using a common mixer such as a ribbon blender, tumbler, Nauta mixer, or Henschel mixer.

One example of a stirring device used for the above mentioned spraying and stirring is a device equipped with a cylindrical container having a bottom, a screw that rotates and revolves along the inner wall surface of the container, and a spraying means that sprays the fatty acid metal salt (or the fatty acid metal salt and the fatty acid) onto the methacrylic-based resin pellet placed in the container.

Examples of the spraying means include a spray nozzle that sprays the fatty acid metal salt (or the fatty acid metal salt and the fatty acid), and the like. The spraying means may include a heating means such as a heater for heating the fatty acid metal salt (or the fatty acid metal salt and the fatty acid).

The methacrylic-based resin pellet of the present invention is fed into a container of such a stirring device, and the fatty acid metal salt (or the fatty acid metal salt and the fatty acid) is sprayed in a powder, liquid or molten state from a spraying means onto the methacrylic-based resin pellet in the container while being stirred, thereby causing the fatty acid metal salt to adhere to the methacrylic-based resin pellet.

Next, the molding material onto which the fatty acid metal salt (or the fatty acid metal salt and the fatty acid) has been sprayed and adhered is further uniformly stirred by the screw that rotates and revolves along the inner wall surface of the container. Thereby, the fatty acid metal salt (or the fatty acid metal salt and the fatty acid) can be externally added uniformly to the methacrylic-based resin pellet.

In order to externally add the fatty acid metal salt (or the fatty acid metal salt and the fatty acid) to the methacrylic-based resin pellet more uniformly, it is preferable to change the temperature inside the container depending on the type of the fatty acid metal salt (or the fatty acid metal salt and the fatty acid). For example, by raising the temperature inside the container to about 60 to 80°C, the ability of uniform external addition of the fatty acid metal salt (or the fatty acid metal salt and the fatty acid) can be improved.

Examples of the method for changing the temperature inside the container include a method of circulating heated inert gas inside the container, a method of heating the inside of the container with a heater, a method of controlling the temperature by circulating a heat medium and the like through the jacket of the container, and the like.

Examples of the method for dispersing the methacrylic-based resin pellet of the present invention in a liquid containing the fatty acid metal salt (or the fatty acid metal salt and the fatty acid) and then removing the solvent from the surface of the methacrylic-based resin pellet include: a method of adding the fatty acid metal salt (or the fatty acid metal salt and the fatty acid) to the solvent so that the total amount of the fatty acid metal salt (or the fatty acid metal salt and the fatty acid) added to the solvent is 0.05 to 1% by mass to prepare a solution or dispersion, and spraying this solution or dispersion onto the methacrylic-based resin pellet; or a method of introducing the methacrylic-based resin pellet into this solution or dispersion for treatment.

Examples of the method of applying the fatty acid metal salt (or the fatty acid metal salt and the fatty acid) to the methacrylic-based resin pellet by spraying the liquid containing the fatty acid metal salt (or the fatty acid metal salt and the fatty acid), include a method of arranging the methacrylic-based resin pellet on a transfer device such as a conveyor, and continuously spraying the liquid containing the fatty acid metal salt (or the fatty acid metal salt and the fatty acid) when passing through an inside of a sprayer.

The method of adding the methacrylic-based resin pellet of the present invention into the liquid containing the fatty acid metal salt (or the fatty acid metal salt and the fatty acid) and externally adding the fatty acid metal salt (or the fatty acid metal salt and the fatty acid) to the methacrylic-based resin pellet can be carried out by known methods. For example, the fatty acid metal salt (or the fatty acid metal salt and the fatty acid) containing liquid and the methacrylic-based resin pellet are fed into a mixing tank equipped with a stirrer, and mixed for a predetermined time at a temperature of 0°C to the boiling point of the solvent. Then the methacrylic-based resin pellet and the liquid are separated by filtration or other methods.

Next, the solvent is dried by blowing air or if necessary by applying hot air. At this time, since the fatty acid metal salt (or the fatty acid metal salt and the fatty acid) does not volatilize, it remains as it is on the surface of the methacrylic-based resin pellet. Therefore, after drying, it is possible to obtain the molding material of the present invention to which the fatty acid metal salt (or the fatty acid metal salt and the fatty acid) is externally added.

As the solvent, commonly used solvents can be used. As the solvent, depending on the composition of the methacrylic-based resin in the methacrylic-based resin pellet, it is preferable to use a solvent in which no or almost no dissolution of the methacrylic-based resin is observed. Such a solvent may include, for example, water. Preferred solvents are those having a boiling point of 30°C to 150°C at normal pressure from the viewpoint of the efficiency and workability of the drying process, and water is particularly preferred from the viewpoint of cost and safety.

### [Resin molded article]

The resin molded article of the present invention is made by molding the molding material of the present invention.

Although the resin molded article of the present invention is not particularly limited as long as it is molded by known molding methods such as press molding, injection molding, gas-assisted injection molding, welding molding, extrusion molding, hollow molding, film molding, blow molding, multi-layer molding, melt spinning, and the like, press molding, extrusion molding, injection molding, or film molding is more preferable, and injection molding is even more preferable from the viewpoint of obtaining excellent plasticizing properties.

For these reasons, the molding material of the present invention is suitable for a molding material for press molding, extrusion molding, injection molding, or film molding (also referred to as use in press molding, extrusion molding, injection molding, or film molding), and is particularly suitable for injection molding (also referred to as use in injection molding).

Specific examples of the resin molded article of the present invention include vehicle parts such as tail lamp covers, headlamp covers, meter panels, pillar garnishes, front grills, emblems, and other vehicle interior and exterior materials; building members; housing equipment parts such as washstands, bathtubs, flush toilets, and the like; optical parts such as lenses, light guides, and the like, containers for cosmetics, and the like, and medical parts such as cuvettes, and the like.

Among these, the resin molded article of the present invention is particularly suitable for use in a vehicle part, an optical part, a container, a medical part, a housing equipment part, a cosmetic container, and the like due to its excellent appearance, weather resistance, transparency, and chemical resistance.

### Examples

The present invention will be described in more detail with reference to Examples below.

### [Raw materials used]

The raw materials used in the following Examples and Comparative Examples are as follows.

### <Methacrylic-based resin>

PMMA: Methacrylic resin "ACRYPET (registered trademark) VH" manufactured by Mitsubishi Chemical Corporation

### <Fatty acid>

Palmitic acid: "Lunac P-95" manufactured by Kao Corporation
Stearic acid: "Lunac S-98" manufactured by Kao Corporation

### <Fatty acid metal salt>

Lithium stearate: "Lithium stearate" manufactured by Kawamura Kasei Industry Co., Ltd. (In Table 1, it is listed as "Li stearate".)
Sodium stearate: "Sodium stearate" manufactured by Kawamura Kasei Industry Co., Ltd. (In Table 1, it is listed as "Na stearate".)
Calcium stearate: "Calcium stearate" manufactured by Kawamura Kasei Industry Co., Ltd. (In Table 1, it is listed as "Ca stearate".)
Aluminum stearate: "Alste #30" manufactured by Kawamura Kasei Industry Co., Ltd. (In Table 1, it is listed as "Al stearate".)
Magnesium stearate: "Mg-St" manufactured by Nitto Chemical Industry Co., Ltd. (In Table 1, it is listed as "Mg stearate".)

### <Other aliphatic compounds>

Stearic acid amide: "NEUTRON-2" manufactured by Nippon Fine Chemical Co., Ltd.
Stearyl alcohol: "Calcol 8098" manufactured by Kao Corporation
Stearic acid monoglyceride: "Rikemal S-100" manufactured by Riken Vitamin Co., Ltd.

### <Benzotriazole-based ultraviolet absorber>

"Tinuvin (registered trademark)-P" manufactured by BASF Japan, 2-(2H-benzotriazol-2-yl)-4-methylphenol

### [Evaluation methods]

The evaluation methods for the resin molded articles manufactured in the following Examples and Comparative Examples is as follows.

### (1) Appearance

The resin molded article test pieces were visually inspected and evaluated according to the following criteria based on the number of test pieces on which silver marks (poor appearance) occurred.
∘: The number of test pieces on which silver marks occurred was 2 or less out of 10 test pieces.
×: The number of test pieces on which silver marks occurred was 3 or more out of 10 test pieces.

### (2) Color Tone

The yellow index (YI) value of the resin molded article test piece was measured using a spectrophotometer **"U-4100"** manufactured by Hitachi High-Technologies Corporation in accordance with JIS K7105 in a transmission mode with a light source C transmission method and an optical path length of 140 mm**.** Measurements were performed on three test pieces, the average of the measured values was calculated, and the average was used to evaluate the results according to the following criteria.
∘: YI value was less than 10.0.
×: YI value was 10.0 or more.

### (3) Weather resistance

The following accelerated exposure test was performed on the resin molded article test pieces, and L*, a*, and b* were measured after the test to determine the color difference ΔE*ab.

### <Accelerated exposure test>

The accelerated exposure test was performed using "Eye Super UV Tester" manufactured by Iwasaki Electric Co., Ltd. Specifically, the injection molded test piece prepared for the appearance evaluation was cut into a resin molded test piece (50 mm x 50 mm x 4 mm), and this test piece was placed in an evaluation chamber and irradiated with ultraviolet light having a wavelength of 300 to 400 nm and an irradiation intensity of 150 mW/m² from an Eye Super UV tester for 200 hours. The irradiation position was adjusted every 25 hours to ensure uniform UV irradiation on the test piece.

The L*, a*, and b* of the test piece at an optical path length of 4.0 mm before and after the test were measured using a spectrophotometer (model name "U-4100", manufactured by Hitachi High-Technologies Corporation) to determine the color difference ΔE*ab. From this color difference ΔE*ab value, evaluation was made according to the following criteria.
o: ΔE*ab value was less than 3.0.
×: ΔE*ab value was 3.0 or more.

### [Example 1]

PMMA, palmitic acid as a fatty acid, and a benzotriazole-based ultraviolet absorber (Tinuvin-P) were used as raw materials so that the contents of palmitic acid and Tinuvin-P in 100 parts by mass of the resulting methacrylic-based resin pellet were as shown in Table 1. These were fed to a twin-screw extruder (model name "TEM35", manufactured by Shibaura Machine Co., Ltd.), and melt kneaded at a cylinder temperature of 250°C and a die temperature of 60°C to obtain methacrylic-based resin pellets containing the fatty acid and the benzotriazole-based ultraviolet absorber.

This methacrylic-based resin pellet has a cylindrical shape (surface area: 46 mm²) having a major axis of 3.2 mm in the direction orthogonal to the axial direction and an axial length of 3.0 mm.

Lithium stearate was externally added as a fatty acid metal salt to the obtained methacrylic-based resin pellets containing the fatty acid and the benzotriazole-based ultraviolet absorber using the following method.

The methacrylic-based resin pellets dried at 80°C for 16 hours or more and 0.005 parts by mass of powdered lithium stearate relative to 100 parts by mass of the methacrylic-based resin pellets were placed in a polyethylene bag and hand-blended for 1 minute to obtain a molding material in which lithium stearate was externally added to the methacrylic-based resin pellets containing the fatty acid and the benzotriazole-based ultraviolet absorber in the amount shown in Table 1.

After drying the obtained molding material with hot air at 80°C for about 16 hours, injection molding was performed under the following conditions to produce 20 test pieces of resin molded article, and the above mentioned evaluations (1) to (3) were evaluated.
·Injection molding machine: Model name: EC75-SXII, manufactured by Shibaura Machine Co., Ltd.
·Mold: 120mm x 140mm x 4mm plate molding mold
·Cylinder temperature: 230°C
·Hopper bottom temperature: 50°C
·Mold temperature: 60°C
·Cycle time: 60 seconds
·Screw rotation speed: 90 rpm
·Back pressure: 10MPa

The evaluation results are shown in Table 1.

### [Example 2 and Example 3]

Test pieces of resin molded article were produced in the same manner as in Example 1, except that the amount of external addition of lithium stearate was changed as shown in Table 1, and evaluation was performed in the same manner. The results are shown in Table 1.

### [Example 4 and Examples 6 to 8]

Test pieces of resin molded article were produced in the same manner as in Example 1, except that the fatty acid metal salt shown in Table 1 was used instead of lithium stearate, and the external addition amount was shown in Table 1, and evaluation was performed in the same manner. The results are shown in Table 1.

### [Example 5]

PMMA and the benzotriazole-based ultraviolet absorber (Tinuvin-P) were used so that the content of Tinuvin-P relative to 100 parts by mass of the resulting methacrylic-based resin pellets was the content shown in Table 1, and methacrylic-based resin pellets containing the benzotriazole-based ultraviolet absorber were obtained in the same manner as in Example 1.

To the obtained methacrylic-based resin pellets containing the benzotriazole-based ultraviolet absorber, palmitic acid as a fatty acid and lithium stearate as a fatty acid metal salt were externally added in the external amounts shown in Table 1 in the same manner as in Example 1 to obtain a molding material. Using this molding material, test pieces of resin molded article were produced and evaluation was performed in the same manner as in Example 1. The results are shown in Table 1.

### [Example 9]

Test pieces of resin molded article were produced in the same manner as in Example 5, except that stearic acid was used instead of palmitic acid, and evaluation was performed in the same manner. The results are shown in Table 1.

### [Comparative Example 1]

Test pieces of resin molded article were produced in the same manner as in Example 1, except that PMMA was directly pelletized without being kneaded with the fatty acid and the benzotriazole-based ultraviolet absorber, and lithium stearate was externally added to the obtained methacrylic-based resin pellets not containing the fatty acid and the benzotriazole-based ultraviolet absorber in the external amount shown in Table 1 in the same manner as in Example 1, and evaluation was performed in the same manner. The results are shown in Table 1.

### [Comparative Example 2]

Test pieces of resin molded article were produced in the same manner as in Example 1, except that only the fatty acid was kneaded into PMMA without the benzotriazole-based ultraviolet absorber, and lithium stearate was externally added to the resulting methacrylic-based resin pellets containing the fatty acid in the external amount shown in Table 1 in the same manner as in Example 1, and evaluation was performed in the same manner. The results are shown in Table 1.

### [Comparative Example 3]

Test pieces of resin molded article were produced in the same manner as in Example 1, except that only the benzotriazole-based ultraviolet absorber was kneaded into PMMA without the fatty acid, and lithium stearate was externally added to the resulting methacrylic-based resin pellets containing the benzotriazole-based ultraviolet absorber in the external amount shown in Table 1 in the same manner as in Example 1, and evaluation was performed in the same manner. The results are shown in Table 1.

### [Comparative Example 4]

Test pieces of resin molded article were produced in the same manner as in Example 1, except that only the benzotriazole-based ultraviolet absorber was mixed with PMMA without mixing the fatty acid, and the resulting methacrylic-based resin pellets containing the benzotriazole-based ultraviolet absorber were subjected to injection molding without externally adding lithium stearate to the pellets, and evaluation was performed in the same manner. The results are shown in Table 1.

### [Comparative Example 5]

Test pieces of resin molded article were produced and evaluated in the same manner as in Example 1, except that the methacrylic-based resin pellets containing the fatty acid and the benzotriazole-based ultraviolet absorber were subjected to injection molding without externally adding lithium stearate to the pellets, and evaluation was performed in the same manner. The results are shown in Table 1.

### [Comparative Example 6]

No fatty acid was mixed into PMMA, and only the benzotriazole-based ultraviolet absorber was mixed into it. Palmitic acid was externally added as a fatty acid to the resulting methacrylic-based resin pellets containing the benzotriazole-based ultraviolet absorber in the amount shown in Table 1 in the same manner as in Example 1 to obtain a molding material. Test pieces of resin molded article were produced in the same manner as in Example 1, and evaluation was performed in the same manner. The results are shown in Table 1.

### [Comparative Example 7 to Comparative Example 9]

No fatty acid was mixed into PMMA, and only the benzotriazole-based ultraviolet absorber was mixed into it. The aliphatic compound shown in Table 1 was added instead of lithium stearate to the resulting methacrylic-based resin pellets containing the benzotriazole-based ultraviolet absorber in the amount shown in Table 1 in the same manner as in Example 1 to obtain a molding material. Test pieces of resin molded article were produced in the same manner as in Example 1, and evaluation was performed in the same manner. The results are shown in Table 1.

### [Comparative Example 10]

Test pieces of resin molded article were produced in the same manner as in Example 1, except that stearic acid monoglyceride instead of the fatty acid, and the benzotriazole-based ultraviolet absorber were kneaded with PMMA, and lithium stearate was externally added to the obtained methacrylic-based resin pellets containing stearic acid monoglyceride and the benzotriazole-based ultraviolet absorber in the amount shown in Table 1, and evaluation was performed in the same manner. The results are shown in Table 1.

### [Comparative Example 11]

Test pieces of resin molded article were produced in the same manner as in Example 1, except that lithium stearate and the benzotriazole-based ultraviolet absorber were kneaded with PMMA, not the fatty acid, and lithium stearate was not externally added to the resulting methacrylic-based resin pellets containing the fatty acid metal salt and the benzotriazole-based ultraviolet absorber, and evaluation was performed in the same manner. The results are shown in Table 1.

**[Table 1]**

| | PMMA pellets | | | | External additive | | Evaluation results | | | | | |
|---|---|---|---|---|---|---|---|---|---|---|---|---|
| | Benzotriazole-based ultraviolet absorber | | Fatty acid (Fatty acid metal salt) | | | | | | | | | |
| | Type | Content (parts by mass) | Type | Content (parts by mass) | Type | Amount of external additive (parts by mass) | Appearance | | Color tone | | Weather resistance | |
| | | | | | | | Number of silver marks | Evaluation | YI (Optical path length 140mm) | Evaluation | Color difference ΔE*ab | Evaluation |
| Example 1 | Tinuvin-P | 0.03 | Palmitic acid | 0.10 | Li stearate | 0.005 | 0 | O | 3.0 | ○ | 1.1 | ○ |
| Example 2 | Tinuvin-P | 0.03 | Palmitic acid | 0.10 | Li stearate | 0.01 | 0 | O | 5.9 | ○ | 1.2 | ○ |
| Example 3 | Tinuvin-P | 0.03 | Palmitic acid | 0.10 | Li stearate | 0.02 | 0 | ○ | 8.3 | ○ | 1.7 | ○ |
| Example 4 | Tinuvin-P | 0.03 | Palmitic acid | 0.10 | Na stearate | 0.01 | 0 | ○ | 2.9 | ○ | 0.9 | ○ |
| Example 5 | Tinuvin-P | 0.03 | - | - | Li stearate | 0.01 | 2 | ○ | 5.9 | ○ | 1.9 | ○ |
| | | | | | Palmitic acid (external additive) | 0.10 | | | | | | |
| Example 6 | Tinuvin-P | 0.03 | Palmitic acid | 0.10 | Ca stearate | 0.01 | 0 | ○ | 6.8 | ○ | 1.5 | ○ |
| Example 7 | Tinuvin-P | 0.03 | Palmitic acid | 0.10 | Mg stearate | 0.01 | 0 | ○ | 3.6 | ○ | 2.3 | ○ |
| Example 8 | Tinuvin-P | 0.03 | Palmitic acid | 0.10 | Al stearate | 0.01 | 2 | ○ | 2.9 | ○ | 2.1 | ○ |
| Example 9 | Tinuvin-P | 0.03 | - | - | Li stearate | 0.01 | 1 | ○ | 6.5 | ○ | 1.4 | ○ |
| | | | | | Stearic acid (external additive) | 0.10 | | | | | | |
| Comparative Example 1 | - | - | - | - | Li stearate | 0.01 | 0 | ○ | 1.7 | ○ | 12.7 | × |
| Comparative Example 2 | - | - | Palmitic acid | 0.10 | Li stearate | 0.01 | 0 | ○ | 1.5 | ○ | 13.8 | × |
| Comparative Example 3 | Tinuvin-P | 0.03 | - | - | Li stearate | 0.01 | 0 | ○ | 34.5 | × | 0.9 | ○ |
| Comparative Example 4 | Tinuvin-P | 0.03 | - | - | - | - | 1 | × | 2.5 | ○ | 0.8 | ○ |
| Comparative Example 5 | Tinuvin-P | 003 | Palmitic acid | 0.10 | - | - | 1 | × | 3.3 | ○ | 0.9 | ○ |
| Comparative Example 6 | Tinuvin-P | 0.03 | - | - | Palmitic acid | 0.01 | 9 | × | 2.3 | ○ | 0.8 | ○ |
| Comparative Example 7 | Tinuvin-P | 0.03 | - | - | Stearic acid amide | 0.01 | 5 | × | 2.3 | ○ | 0.6 | ○ |
| Comparative Example 8 | Tinuvin-P | 0.03 | - | - | Stearyl alcohol | 0.01 | 10 | × | 2.1 | ○ | 1.0 | ○ |
| Comparative Example 9 | Tinuvin-P | 0.03 | - | - | Stearic acid monoglyceride | 0.01 | 8 | × | 3.6 | ○ | 0.9 | ○ |
| Comparative Example 10 | Tinuvin-P | 0.03 | Stearic acid monoglyceride | 0.10 | Li stearate | 0.01 | 0 | ○ | 36.7 | × | 1.3 | ○ |
| Comparative Example 11 | Tinuvin-P | 0.03 | (Li stearate) | 0.10 | - | - | 10 | × | - | - | - | - |

As is clear from Table 1, the molding material of the present invention, to which a benzotriazole-based ultraviolet absorber is added internally, a fatty acid is added internally or externally, and a fatty acid metal salt is added externally, can give a resin molded article that is excellent in all respects of appearance, color tone, and weather resistance.

In contrast, the molding material of Comparative Example 1, which does not contain a benzotriazole-based ultraviolet absorber and a fatty acid, has poor weather resistance even when lithium stearate is externally added. This weather resistance is not improved by internally adding only a fatty acid, as in Comparative Example 2.

The molding material of Comparative Example 3, which contains only a benzotriazole-based ultraviolet absorber internally and lithium stearate externally, has a problem of yellowing due to the coexistence of the benzotriazole-based ultraviolet absorber and the metal salt, and is poor in color tone.

The molding material of Comparative Example 4, which contains only a benzotriazole-based ultraviolet absorber in the methacrylic-based resin pellets and does not contain lithium stearate externally, has no problem of yellowing, but has poor plasticizing properties during injection molding and the like, which causes a poor appearance (silver marks).

This poor appearance is not improved by adding a fatty acid internally to the methacrylic-based resin pellets as in Comparative Example 5, or by adding a fatty acid externally as in Comparative Example 6.

Furthermore, the poor appearance is not improved by adding an aliphatic compound other than a fatty acid metal salt externally as in Comparative Examples 7 to 9.

Even if an aliphatic compound other than a fatty acid is contained in the methacrylic-based resin pellets, the yellowing is not improved as in Comparative Example 10.

When a fatty acid metal salt is internally added to the methacrylic-based resin pellets, the poor appearance is not improved as in Comparative Example 11. Furthermore, in Comparative Example 11, the fatty acid metal salt was internally added to the methacrylic-based resin pellets, which causes contamination of foreign matter during molding of test pieces, and it was not possible to obtain a molded product article that can be evaluated for color tone and weather resistance, making measurements difficult.

From the above, it can be seen that, according to the present invention, in a molding material in which a fatty acid metal salt is externally added to methacrylic-based resin pellets to improve appearance and a benzotriazole-based ultraviolet absorber is internally added to methacrylic-based resin pellets to improve weather resistance, a resin molded article having excellent appearance, color tone, and weather resistance can be provided by adding a fatty acid internally or externally.

Although the present invention has been described in detail with reference to particular embodiments, it will be apparent to those skilled in the art that various changes may be made thereto without departing from the spirit and scope of the present invention.

The present application is based on Japanese Patent Application No. 2022-166335 filed on October 17, 2022, which is herein incorporated in its entirety by reference.

## Claims

1. A molding material comprising:
a methacrylic-based resin pellet comprising a methacrylic-based resin and a benzotriazole-based ultraviolet absorber; and
a fatty acid metal salt externally added to the methacrylic-based resin pellet,
wherein the molding material comprises a fatty acid.

2. The molding material according to claim 1, wherein the metal of the fatty acid metal salt is a monovalent to trivalent metal.

3. The molding material according to claim 2, wherein the metal of the fatty acid metal salt is a monovalent metal.

4. The molding material according to claim 2, wherein the metal of the fatty acid metal salt is at least one selected from the group consisting of Li, Na, Mg, Ca, Ba, K, and Al.

5. The molding material according to claim 4, wherein the metal of the fatty acid metal salt is Li.

6. The molding material according to claim 1, wherein the benzotriazole-based ultraviolet absorber is at least one selected from the group consisting of 2-(2'-hydroxy-5'-methylphenyl)benzotriazole, 2-[2-hydroxy-3,5-bis(α,α-dimethylbenzyl)phenyl]-2H -benzotriazole, 2-(2'-hydroxy-3'-t-butyl-5'-methylphenyl)-5-chlorobenzotriazole, 2-(2H-benzotriazol-2-yl)-4-methylphenol, 6-di-t-pentylphenol, and 2-(2'-hydroxy-5'-t-octylphenyl)benzotriazole.

7. The molding material according to claim 6, wherein the benzotriazole-based ultraviolet absorber is 2-(2H-benzotriazol-2-yl)-4-methylphenol.

8. The molding material according to claim 1, wherein the fatty acid is at least one selected from the group consisting of saturated fatty acids having 8 to 22 carbon atoms and unsaturated fatty acids having 8 to 22 carbon atoms.

9. The molding material according to claim 8, wherein the fatty acid is at least one selected from the group consisting of palmitic acid, stearic acid, myristic acid, lauric acid, and montanic acid.

10. The molding material according to claim 9, wherein the fatty acid is palmitic acid.

11. The molding material according to claim 1, wherein an amount of the externally added fatty acid metal salt is 0.0001 parts by mass to 0.5 parts by mass relative to 100 parts by mass of the methacrylic-based resin pellet.

12. The molding material according to claim 1, wherein the content of the benzotriazole-based ultraviolet absorber is 0.001 parts by mass to 0.3 parts by mass based on 100 parts by mass of the methacrylic-based resin pellet.

13. The molding material according to claim 1, wherein when the fatty acid is contained in the methacrylic-based resin pellet, the amount of the fatty acid is 0.0001 parts by mass to 0.5 parts by mass based on 100 parts by mass of the methacrylic-based resin pellet, and when the fatty acid is externally added to the methacrylic-based resin pellet, the amount of the fatty acid is 0.0001 parts by mass to 0.5 parts by mass based on 100 parts by mass of the total mass of the methacrylic-based resin pellet and the fatty acid.

14. The molding material according to claim 1, wherein the methacrylic-based resin pellet has a surface area of 10 mm² to 450 mm².

15. The molding material according to claim 1, wherein the content of repeating units derived from methyl methacrylate in the methacrylic-based resin is 50% by mass or more.

16. The molding material according to any one of claims 1 to 15, wherein the molding material is used for press molding, extrusion molding, injection molding, or film molding.

17. A molding material for injection molding comprising the molding material according to any one of claims 1 to 15.

18. Use of the molding material according to any one of claims 1 to 15 for press molding, extrusion molding, injection molding, or film molding.

19. Use of the molding material according to any one of claims 1 to 15 for injection molding.

20. A resin molded article made by molding the molding material according to any one of claims 1 to 15.

21. A vehicle part made by molding the molding material according to any one of claims 1 to 15.

22. An optical part made by molding the molding material according to any one of claims 1 to 15.

23. A container made by molding the molding material according to any one of claims 1 to 15.

24. A medical part made by molding the molding material according to any one of claims 1 to 15.

25. A housing equipment part made by molding the molding material according to any one of claims 1 to 15.

26. A method for producing a resin molded article comprising molding a molding material,
wherein the molding material comprises a methacrylic-based resin pellet and a fatty acid metal salt externally added to the methacrylic-based resin pellet, and
wherein the methacrylic-based resin pellet contains a methacrylic-based resin, a benzotriazole-based ultraviolet absorber, and a fatty acid.

27. A method for producing a resin molded article comprising molding a molding material,
wherein the molding material comprises a methacrylic-based resin pellet, a fatty acid metal salt, and a fatty acid,
wherein the fatty acid metal salt and the fatty acid are externally added to the methacrylic-based resin pellet, and
wherein the pellet contains a methacrylic-based resin, and a benzotriazole-based ultraviolet absorber.

28. The method for producing a resin molded article according to claim 26 or 27, wherein the resin molded article is obtained by injection molding the molding material.
